# EUROPÄISCHE PATENTSCHRIFT

(11) **EP 0 359 896 B1**
(45) Veröffentlichungstag und Bekanntmachung des Hinweises auf die Patenterteilung: **01.06.1994**
(21) Anmeldenummer: 89105123.7
(22) Anmeldetag: 22.03.1989
(51) Int. Cl.: A01B 49/02

(54) **Kombinationsgerät**
Combined machine
Machine combinée

(30) Priorität: 21.09.1988 DE 8811961 U
(43) Veröffentlichungstag der Anmeldung: 28.03.1990
(73) Patentinhaber: Rabewerk GmbH + Co., 49152 Bad Essen (DE)
(72) Erfinder: Warnking, Richard, Dipl.-Ing., D-4515 Bad Essen 1 (DE)
(74) Vertreter: Missling, Arne, Dipl.-Ing.

(56) Entgegenhaltungen:
- EP-A- 0 074 778
- DE-A- 2 940 817
- DE-A- 3 127 263
- DE-A- 3 628 941
- FR-A- 2 509 118
- NL-A- 7 111 947
- US-A- 4 088 083

## Beschreibung

Die Erfindung bezieht sich auf ein Kombinationsgerät nach dem Oberbegriff des Anspruches 1. Die US-A-4 088 083 zeigt ein derartiges Kombinationsgerät.

Bei Geräten zur Bodenbearbeitung ist es wünschenswert, in einem Arbeitsgang das zu bearbeitende Erdreich mittels eines Vorlockerers, beispielsweise eines Grubbers, zu lockern, nachfolgend mittels einer Bodenbearbeitungsmaschine, beispielsweise einer Kreiselegge, zu bearbeiten und anschließend durch eine Walze zu ebnen oder zu verdichten.

Bei derartigen Kombinationsgeräten oder Bodenbearbeitungsgeräten ist es erforderlich, daß die Werkzeuge des Vorlockerers ebenso wie die Werkzeuge der Bodenbearbeitungsmaschine Hindernissen im Boden, beispielsweise Steinen, ausweichen, um eine Beschädigung zu vermeiden. Wäre ein derartiges Gerät starr und unnachgiebig ausgebildet, so würde bei einem Auftreffen des Werkzeuges auf ein Hindernis das Werkzeug abbrechen oder verbiegen. Aus diesem Grunde wurde bei der aus der DE-OS 36 28 941 bekannten Gerätekombination vorgeschlagen, die Bodenbearbeitungsmaschine so zu lagern, daß diese in vertikaler Richtung bewegbar ist. Dabei erweist es sich jedoch als nachteilig, daß der Vorlockerer selbst nur gegenüber dem Schlepper höhenveränderbar ist aufgrund der Schwimmstellung, wenn der Dreipunktturm durch eine Verschwenkung des Oberlenkers und der Unterlenker des Schleppers in seiner Höhe verändert wird. Bei einer derartigen Bewegung erfolgt gleichzeitig ein Anheben der Bodenbearbeitungsmaschine. Keine Höhenveränderbarkeit besteht gegenüber der Bodenbearbeitungsmaschine. Bei einem Auftreffen des Vorlockerers auf ein Hindernis im Erdreich wird somit das gesamte Kombinationsgerät stoßartig angehoben, möglicherweise sogar unter Anhebung der an der Bodenbearbeitungsmaschine gelagerten Walze. Da für ein derartiges Anheben erhebliche Kräfte erforderlich sind, ist es nicht möglich, daß der Vorlockerer bzw. die Bodenbearbeitungsmaschine auch geringfügigen Hindernissen ausweicht, vielmehr ist es erforderlich, daß auf die Werkzeuge des Vorlockerers eine sehr starke Kraft aufgebracht wird. Es besteht somit trotz der Möglichkeit des Ausweichens die Gefahr, daß die Werkzeuge des Vorlockerers und/oder der Bodenbearbeitungsmaschine beschädigt werden. Weiterhin erweist es sich als nachteilig, daß beim Anheben der gesamten Gerätekombination eine sehr starke Beanspruchung der jeweiligen Lagerungen stattfindet, welche zu einem erheblichen Verschleiß bzw. zu Beschädigungen führen kann.

Bei dem aus der DE-OS 27 26 466 bekannten Bodenbearbeitungsgerät ist bei einem Auftreffen des Vorlockerers ebenfalls ein Anheben des gesamten Gerätes, einschließlich der Walze, erforderlich. Bedingt durch die dabei erforderlichen Kräfte ist es praktisch nicht möglich, kleinen und mittelgroßen Hindernissen wirkungsvoll auszuweichen. Es besteht bei diesen Geräten somit die Gefahr, daß bereits geringste Hindernisse des Erdreichs die jeweiligen Werkzeuge zerstören.

Der Erfindung liegt die Aufgabe zugrunde, ein Kombinationsgerät der eingangs genannten Art zu schaffen, welches bei einfachem Aufbau und geringen Abmessungen eine sichere Bodenbearbeitung ermöglicht und bei welchem insbesondere bei einer ausreichenden Belastung der Walze ein Ausweichen der Bodenbearbeitungsmaschine für sich allein und auch ein Ausweichen des Vorlockerers für sich allein möglich ist.

Erfindungsgemäß wird diese Aufgabe mit den Merkmalen des Anspruches 1 gelöst.

Das erfindungsgemäße Kombinationsgerät zeichnet sich durch eine Reihe erheblicher Vorteile aus. Da die Walze erfindungsgemäß mit ihren Tragarmen am unteren Bereich des Dreipunktturms gelagert ist, erstrecken sich die Tragarme im wesentlichen über die gesamte Länge des Kombinationsgerätes. Sowohl die Bodenbearbeitungsmaschine und gegebenenfalls auch der Vorlockerer sind somit in ihrer Bewegungsfreiheit nicht durch andere Hauptbestandteile der Kombination beeinträchtigt, insbesondere ist es nicht erforderlich, bei einem Anheben des Vorlockerers oder der Bodenbearbeitungsmaschine die Walze mitanzuheben. Diese verbleibt vielmehr auf dem Erdreich und dient als Abstützung sowohl des Vorlockerers als auch der Bodenbearbeitungsmaschine, um die jeweilige Bearbeitungstiefe einstellen zu können.

Durch die erfindungsgemäß geschaffene Möglichkeit, sowohl den Vorlockerer als auch die Bodenbearbeitungsmaschine auf den Tragarmen abzustützen, wird gewährleistet, daß stets eine ausreichende Kraft auf die Walze wirkt, um eine ausreichende Bodenbearbeitung im Bereich der Walze sicherzustellen. Durch diese Maßnahme ist es möglich, das Gewicht der Walze zu reduzieren und diese leichter zu bauen.

Da die Tragarme der Walze im vorderen Bereich des Kombinationsgerätes gelagert sind, steht ein ausreichend langer Hebelarm zur Verfügung, so daß die Walze selbst in einem relativ geringen Abstand zu der Bodenbearbeitungsmaschine angeordnet werden kann.

Da der Dreipunktturm, welcher der Lagerung des Vorlokkerers dient, in üblicher Weise über Unterlenker und einen Oberlenker an einen Schlepper ankoppelbar ist, ist es möglich, in einer Schwimmstellung des Dreipunktturms eine ausreichende vertikale Bewegbarkeit des an dem Dreipunktturm befestigten Vorlockerers sicherzustellen. Die Einstellung der Arbeitstiefe des Vorlockerers kann durch eine Begrenzung der Verschwenkbarkeit der Unterlenker erfolgen. Günstig ist eine zusätzliche Verstellbarkeit der Vorlockerer-Werkzeuge, weil man den Dreipunktturm wegen des Aushubgestänges nicht viel in der Höhe verstellen sollte. Die Abstützung sowohl des Vorlockerers als auch der Bodenbearbeitungsmaschine auf den Tragarmen der Walze begrenzt ebenfalls die Bearbeitungstiefe, so daß sowohl im Bereich des Vorlockerers als auch im Bereich der Bodenbearbeitungsmaschine auf zusätzliche Stützräder verzichtet werden kann.

In einer besonders vorteilhaften Weiterbildung der Erfindung ist vorgesehen, daß an dem unteren Bereich des Dreipunktturms jeweils ein Anschlag zur Anlage des Tragarms angeordnet ist. Diese Ausgestaltungsform weist den Vorteil auf, daß der Tragarm der Walze am unteren Bereich des Kombinationsgerätes angeordnet werden kann, wodurch eine niedere Bauhöhe und eine niedrige Schwerpunktslage erzielbar sind. Weiterhin ist durch den Anschlag sichergestellt, daß im wesentlichen das gesamte Gewicht des Vorlockerers auf dem Tragarm der Walze aufliegt. Die Anschläge sind in einem Abstand zur Schwenkachse der Tragarme angeordnet, beispielsweise an den Endbereichen einer an dem Dreipunktturm befestigten Platte. Bei dieser Ausgestaltungsform können sich besonders günstige Hebelverhältnisse ergeben, die zu einer vorteilhaften Krafteinleitung auf den Tragarm der Walze führen. Dies ist insbesondere dann von Vorteil, wenn die gesamte Baulänge des Kombinationsgerätes sehr kurz ist.

Um eine betriebssichere und den Anforderungen hinsichtlich der Krafteinleitung genügende Abstützung der Bodenbearbeitungsmaschine an dem Tragarm der Walze zu gewährleisten, kann vorgesehen sein, daß die Bodenbearbeitungsmaschine an einem der Walze zugewandten Endbereich jeweils einen Anschlag zur Anlage des Tragarmes aufweist. Ebenso wie der vorgenannte Anschlag des Vorlockerers ist der Anschlag der Bodenbearbeitungsmaschine oberhalb des Tragarms ausgebildet, so daß die Bodenbearbeitungsmaschine in vertikaler Richtung anhebbar ist.

Bevorzugterweise ist die Bodenbearbeitungsmaschine über im wesentlichen parallel angeordnete Lenker an dem Dreipunktturm gelagert. Es können zwei Lenkerpaare oder ein Unterlenkerpaar mit einem Oberlenker vorgesehen sein. Die oberen Lenker werden bevorzugt längeneinstellbar ausgeführt. Bei Verwendung von vier Lenkern sind diese bevorzugt entweder im engeren Bereich des Dreipunktturms oder an den Außenbereichen der Seiten der Maschine angeordnet. Bei dieser Ausgestaltungsform ergibt sich eine parallelogrammartige Gesamtanordnung, welche, zumindest in dem Größenbereich, in welchem die Bodenbearbeitungsmaschine in vertikaler Richtung angehoben werden soll, eine im wesentlichen geradlinige vertikale Bewegung der Bodenbearbeitungsmaschine möglich ist. Weiterhin erweist sich die Lagerung der Bodenbearbeitungsmaschine mittels dieser Lenkeranordnung als besonders robust und widerstandsfähig, so daß Beschädigungen im wesentlichen ausgeschlossen sind.

Alternativ zu dem eben beschriebenen Ausführungsbeispiel ist es auch möglich, daß die Bodenbearbeitungsmaschine an den Tragarmen jeweils über eine eine vertikale Bewegung ermöglichende Langlochführung, die an den Tragarmen ausgebildet ist, und an dem Dreipunktturm über zumindest einen oberen Lenker gelagert ist. Bei dieser Ausgestaltungsvariante liegt die Bodenbearbeitungsmaschine über den Anschlag in der Langlochführung vollständig auf dem Tragarm der Walze auf, so daß eine besonders gleichmäßige und vor allem stabile Abstützung gewährleistet ist Dies kann sich beispielsweise dann als vorteilhaft erweisen, wenn der Rahmen der Bodenbearbeitungsmaschine leichter dimensioniert ist und keine übermäßige Festigkeit oder Verwindungssteifigkeit aufweist. In diesem Falle werden insbesondere Beschädigungen des Getriebes oder des Getriebegehäuses der Bodenbearbeitungsmaschine ausgeschlossen.

Zur leichteren Einstellbarkeit des Kombinationsgerätes auf die erforderliche Bearbeitungstiefe kann es sich erfindungsgemäß als besonders günstig erweisen, wenn die Anschläge jeweils einstellbar in Form von Bolzen ausgebildet sind, welche wahlweise in eine von jeweils mehreren Ausnehmungen einsteckbar sind. Durch diese Ausgestaltung ist es auf besonders einfache Weise möglich, eine Veränderung der Arbeitstiefe vorzunehmen und die eingestellte Arbeitstiefe nachzuprüfen. Weiterhin erweist sich diese Ausführungsform als besonders störungsunanfällig und kann somit auch von wenig geübten Bedienungspersonen vorgenommen werden.

Um im Bereich der Anschläge eine ausreichende Festigkeit zu gewährleisten, kann es sich als günstig erweisen, wenn die Ausnehmungen, in welche die Bolzen einsteckbar sind, jeweils in einer Lagerplatte ausgebildet sind, welche an dem Dreipunktturm des Vorlockerers bzw. an einem Rahmen der Bodenbearbeitungsmaschine angebracht ist. Weiterhin erweist es sich dabei als günstig, daß die Lagerplatte einen ausreichenden Raum zur Verfügung stellt, um mehrere Ausnehmungen, beispielsweise in einer oder in mehreren Reihen anzubringen.

Die Einstellung der Arbeitstiefe der Bodenbearbeitungsmaschine kann auch dadurch erfolgen, daß zwischen dem Dreipunktturm und dem Rahmen der Bodenbearbeitungsmaschine ein längenveränderbarer, eine Langlochführung aufweisender Schräglenker angeordnet ist. Dabei ermöglicht die Langlochführung eine ausreichende vertikale Bewegbarkeit der Bodenbearbeitungsmaschine, während die Längenveränderbarkeit des Schräglenkers zur Einstellung der Arbeitstiefe dient. Der Schräglenker kann beispielsweise in Form einer Spindel oder eines Spannschlosses ausgebildet sein.

Eine Ausführungsform der Erfindung kann darin bestehen, daß auf das Anheben des Vorlockerers verzichtet wird, und das Kombinationsgerät so ausgebildet ist, daß lediglich die Bodenbearbeitungsmaschine höhenveränderbar gelagert ist. Dies kann sich deshalb als besonders vorteilhaft erweisen, da die Werkzeuge der zapfwellenangetriebenen Bodenbearbeitungsmaschine in besonders hohem Maße bruchgefährdet sind. Weiterhin sind sowohl das Getriebe als auch die Lagerungen dieser Bodenbearbeitungsmaschine besonders gefährdet. Demgegenüber können die Vorlockerer-Werkzeuge so ausgebildet sein, daß sie bei einem Auftreffen auf feststehende Hindernisse nicht beschädigt werden.

Erfindungsgemäß kann es sich weiterhin als günstig erweisen, die Werkzeuge des Vorlockerers zu neigen, beispielsweise in einem spitzen Winkel schräg bezüglich der Fahrtrichtung anzustellen, um auf diese Weise den Vorlockerer nach unten zu ziehen. Dies führt zu einer stärkeren Belastung der Walze. Die Einstellung der Werkzeuge des Vorlockerers kann auch durch eine Veränderung der Länge der jeweiligen Lenker erfolgen, welche den Turm des Vorlockerers mit dem Turm der Bodenbearbeitungsmaschine verbinden.

Weiterhin kann es sich erfindungsgemäß als günstig erweisen, zwischen den Türmen des Vorlockerers und der Bodenbearbeitungsmaschine ein Federelement anzuordnen, welches ein Ausweichen der Bodenbearbeitungsmaschine nach oben durch die Vorspannung der Feder unterstützt.

Um bei einem Anheben des gesamten Kombinationsgerätes, beispielsweise um dieses zum Transport vom Erdboden zu trennen, auch die Walze und die Bodenbearbeitungsmaschine zusammen mit dem Dreipunktturm des Vorlockerers anzuheben, kann es sich als besonders günstige Lösung erweisen, wenn die Lagerplatte des Vorlockerers einen unteren Anschlag zur Auflage des jeweiligen Tragarms der Walze aufweist. Die Lage des Anschlags an der Lagerplatte ist dabei so zu wählen, daß eine Verschwenkung des Tragarms während des normalen Betriebs des Kombinationsgerätes nicht eingeschränkt wird.

Die Bodenbearbeitungsmaschine ist erfindungsgemäß bevorzugterweise in Form einer Kreiselegge ausgebildet, welche beispielsweise eine Breite von 3 m aufweisen kann. Die Vorlockerer sind bevorzugterweise in Form gänsefußartiger Grubberscharen ausgestaltet, welche jeweils sehr breit ausgebildet sind. Bei einer Arbeitsbreite von 3 m ist es beispielsweise ausreichend, vier Grubberscharen an dem Dreipunktturm zu lagern. Derartige Schare würden eine sehr erhebliche Kraft zum Anheben des Vorlockerers im Erdreich erfordern.

Bei dem erfindungsgemäßen Kombinationsgerät ist somit die Möglichkeit geschaffen, daß die Bodenbearbeitungsmaschine und auch der Vorlockerer unabhängig voneinander in vertikaler Richtung Bodenhindernissen ausweichen können. Weiterhin stützen sich sowohl der Vorlockerer als auch die Bodenbearbeitungsmaschine direkt auf den Tragarmen der Walze ab, so daß diese in ausreichender Weise belastet wird. Dabei erweist es sich als vorteilhaft, daß die Bodenbearbeitungsmaschine nicht durch das Gewicht des Vorlockerers belastet wird, so daß die Gefahr einer Beschädigung der Bodenbearbeitungsmaschine, insbesondere deren Gehäuses, auszuschließen ist.

Um bei dem erfindungsgemäßen Kombinationsgerät das Einstellen der Arbeitstiefe zu erleichtern, kann es sich als besonders günstig erweisen, wenn eine zusätzliche Abstützeinrichtung vorgesehen ist, welche im ausgehobenen Zustand des Kombinationsgerätes als Begrenzung der Bewegbarkeit der Bodenbearbeitungsmaschine gegenüber dem Dreipunktturm wirkt. Bei dieser Ausgestaltungsform ist es, im Gegensatz zu den vorbeschriebenen Ausführungsformen, möglich, im ausgehobenen Zustand eine freie Bewegbarkeit der Kreiselegge sicherzustellen. Es ist dabei nicht erforderlich, die Werkzeuge der Bodenbearbeitungsmaschine bzw. Kreiselegge auf einen festen Untergrund aufzustellen, um die Lage der Anschläge zu versetzen. In günstiger Weiterentwicklung der Erfindung kann die Abstützeinrichtung zumindest einen Anschlag umfassen, welcher am Dreipunktturm oder an einem Querbalken des Dreipunktturms angeordnet ist, es ist jedoch auch möglich, die Abstützeinrichtung in Form eines Spannschlosses auszubilden, welches am Dreipunktturm und im Bereich der Bodenbearbeitungsmaschine angeordnet ist. Bei letztgenannter Ausgestaltungsform kann es sich weiterhin als günstig erweisen, wenn das Spannschloß zur Ermöglichung einer Ausweichbarkeit der Bodenbearbeitungsmaschine während des Betriebs mit einer Langlochführung versehen ist.

Erfindungsgemäß kann es zusätzlich wünschenswert sein, die Gesamtbreite der Bodenbearbeitungsmaschine so zu wählen, daß diese im wesentlichen der zulässigen Transportbreite des Kombinationsgerätes entspricht. Zu diesem Zwecke können die Tragarme oberhalb der Bodenbearbeitungsmaschine und innenliegend bezüglich von Tragarmen der Walze angeordnet sein und sich auf einem die Tragarme verbindenden Querbalken abstützen. Die Gesamtbreite des Kombinationsgeräts wird somit um die benötigte Breite der Tragarme verringert. Der Tragbalken kann dabei mit einer profilierten Fläche versehen sein, um stets eine optimale Krafteinleitung auf die Walze sicherzustellen.

Es kann auch eine zusätzliche Einstellung der Neigung der Vorlockerer erfolgen, beispielsweise durch Änderung der Länge der oberen Lenker des Koppelgestänges, womit eine zusätzliche Belastung der Walze durch Arbeitskräfte des Vorlockerers erzielt werden kann.

Im folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels des erfindungsgemäßen Kombinationsgerätes;
- Fig. 2: eine Seitenansicht ähnlich Fig. 1 eines weiteren Ausführungsbeispiels;
- Fig.3: eine Detailansicht einer weiteren Ausgestaltungsvariante des erfindungsgemäßen Kombinationsgerätes;
- Fig. 4: eine schematische Seitenansicht eines weiteren Ausführungsbeispiels des erfindungsgemäßen Kombinationsgerätes.
- Fig. 5: eine schematische Seitenansicht eines weiteren Ausführungsbeispiels, ähnlich Fig. 4; und
- Fig. 6: eine schematische Seitenansicht eines weiteren Ausführungsbeispiels des erfindungsgemäßen Gerätes.

Das erfindungsgemäße Kombinationsgerät umfaßt einen Vorlockerer 1, welcher in Form von Grubberscharen ausgebildet ist, sowie eine nachgeordnete Bodenbearbeitungsmaschine 2, welche als Kreiselegge ausgebildet ist. Nach der Kreiselegge ist eine Walze 3 angeordnet, welche der Tiefenführung der Bodeneinebnung und/oder der Bodenverdichtung dient.

Der Vorlockerer 1 ist an einem Dreipunktturm 4 befestigt, welcher über einen Oberlenker 20 und zwei Unterlenker 21 mit einem Schlepper verbunden ist. Der Oberlenker 20 und die Unterlenker 21 sind jeweils schwenkbar an dem Schlepper gelagert.

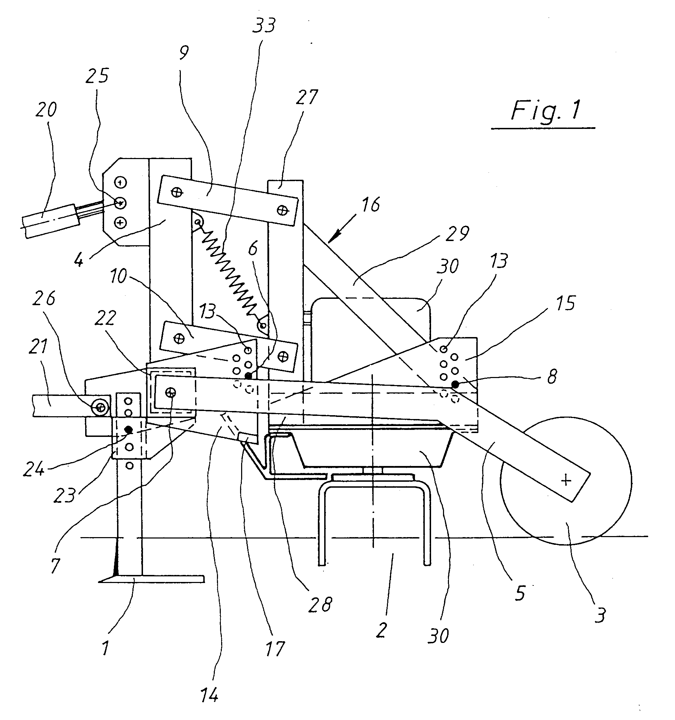

Der Dreipunktturm 4 umfaßt einen Querholm 22, welcher sich über die gesamte Breite des Kombinationsgerätes erstreckt. An der Vorderseite des Querholms 22 sind Taschen 23 ausgebildet, in welchen jeweils die vertikalen Stiele der Grubberschare des Vorlockerers aufgenommen sind. In Fig. 1 sind die Grubberschare so ausgebildet, daß diese mehrere Ausnehmungen 24 umfassen, welche eine höhenveränderbare Einstellung bezüglich der Taschen 23 ermöglichen.

Die Befestigung des Dreipunktturms 4 an dem Oberlenker erfolgt über einen Anlenkpunkt 25, welcher ebenfalls höhenverstellbar ist. Die Unterlenker 21 sind jeweils an einem Anlenkpunkt 26 mit dem Dreipunktturm 4 verbunden.

Im Bereich des Querholms 22 sind Schwenkzapfen 7 an dem Dreipunktturm 4 vorgesehen, an welchen seitliche Tragarme 5 der Walze 3 schwenkbar gelagert sind. Bei dem gezeigten Ausführungsbeispiel erstreckt sich der Tragarm 5 in seinem Hauptbereich im wesentlichen in waagerechter Richtung und weist an seinem Endbereich eine Abwinkelung auf.

An dem unteren Bereich des Dreipunktturms 4 bzw. an den Enden des Querholms 22 ist jeweils eine Lagerplatte 14 befestigt, welche mit mehreren Ausnehmungen 13 versehen ist, durch welche ein einen Anschlag 6 bildender Bolzen durchführbar ist. In der in Fig. 1 gezeigten Betriebsposition bildet der Anschlag 6 ein Auflager, gegen welchen sich der Tragarm 5 abstützt.

Am unteren Ende der Lagerplatte 14 ist ein unterer Anschlag 17 ausgebildet, welcher bei einem Anheben des Dreipunktturms 4 durch den Schlepper zu einem Heben des Tragarms 5 und damit auch der Bodenbearbeitungsmaschine 2 führt.

An dem Dreipunktturm 4 sind weiterhin je zwei parallele-Lenker 9, 10 schwenkbar gelagert, welche zur Ausbildung eines Lenkerparallelogramms an einem vertikalen Turm 27 eines Rahmens 16 der Bodenbearbeitungsmaschine 2 gelagert sind. Bei einer Verschwenkung der parallen Lenker 9, 10 ist es somit möglich, den vertikalen Turm 27 in vertikaler Richtung zu verschieben, um auf diese Weise die Bodenbearbeitungsmaschine 2 aus dem Erdreich zu heben.

Der Rahmen 16 der Bodenbearbeitungsmaschine 2 umfaßt weiterhin horizontale Streben 28, welche an einem Ende mit dem unteren Bereich des vertikalen Turms 27 und an ihrem anderen Ende mit Querstreben 29 verbunden sind. An den Seiten des Rahmens 16 sind Lagerplatten 15 befestigt, welche ebenfalls eine oder mehrere Reihen von Ausnehmungen 13 umfassen, in welche jeweils ein einen Anschlag 8 bildender Bolzen einführbar ist, welcher sich bei der in Fig. 1 gezeigten Betriebsposition gegen den Tragarm 5 abstützt.

An dem Rahmen 16 ist ein Gehäuse 30 der Bodenbearbeitungsmaschine gelagert, welches das Getriebe zum Antrieb der Werkzeuge der Kreiselegge umfaßt.

In Fig. 1 ist ein Betriebszustand gezeigt, bei welchem sich das Kombinationsgerät in einer normalen Betriebsposition befindet. Bei einem Auftreffen auf ein Hindernis im Erdreich kann erfindungsgemäß der Dreipunktturm 4 durch Verschwenkung des Oberlenkers 20 und der Unterlenker 21 nach oben angehoben werden. Dies ist durch eine Lagerung des Dreipunktturms 4 in Schwimmstellung an einem Schlepper möglich. Unabhängig davon kann die Bodenbearbeitungsmaschine 2 durch eine Verschwenkung der parallen Lenker 9, 10 vom Erdboden abheben, sobald deren Werkzeuge auf ein Hindernis treffen. Ein Abheben des Vorlockerers 1 beeinflußt dabei grundsätzlich nicht die Bodenbearbeitungsmaschine 2 und umgekehrt. Insbesondere führt ein Anheben des Vorlockerers 1 nicht dazu, daß der Anschlag 8 vom Tragarm 5 der Walze 3 abgehoben wird, so daß die Walze 3 weiterhin durch das Gewicht der Bodenbearbeitungsmaschine 2 belastet wird.

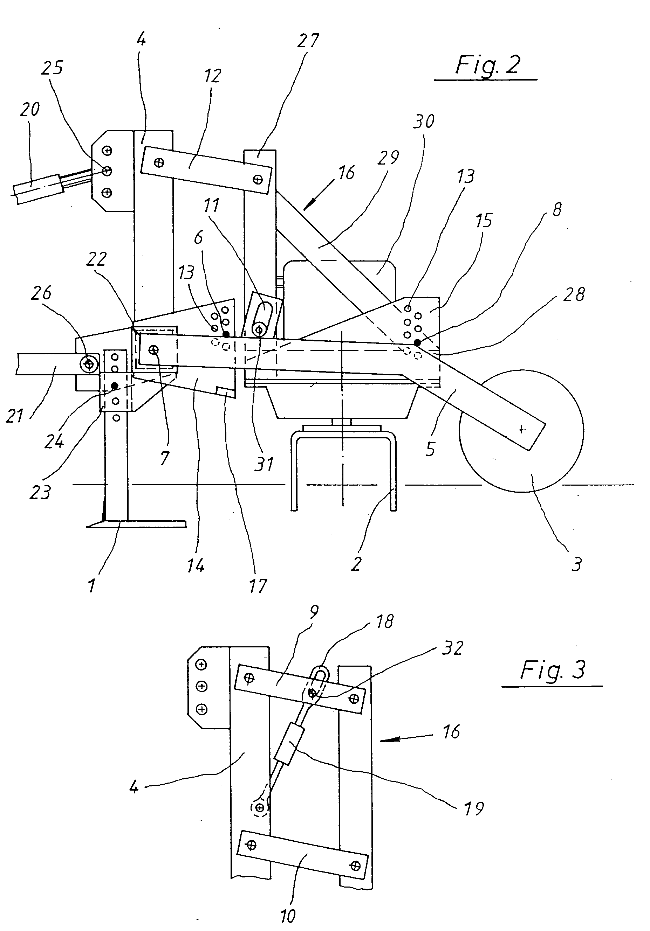

Das in Fig. 2 gezeigte Ausführungsbeispiel entspricht im wesentlichen dem Ausführungsbeispiel gemäß Fig. 1, gleiche Teile wurden mit gleichen Bezugsziffern versehen. Im Gegensatz zu dem in Fig. 1 gezeigten Ausführungsbeispiel ist nur ein oberer Lenker 12 vorgesehen, um den vertikalen Turm 27 der Bodenbearbeitungsmaschine 2 mit dem Dreipunktturm 4 zu verbinden. Eine Lagerung des unteren Bereichs der Bodenbearbeitungsmaschine 2 erfolgt über eine Langlochführung 11, welche an dem Tragarm 5 befestigt ist. In dem Langloch der Langlochführung 11 ist eine Führungsrolle 31 bewegbar, welche eine Vertikalbewegung bzw. ein Anheben der Bodenbearbeitungsmaschine 2 ermöglicht. Bevorzugterweise ist die Führungsrolle 31 an der Lagerplatte 15 gelagert.

Bei den in den Fig. 1 und 2 gezeigten Ausführungsbeispielen ist es möglich, auf die Tiefeneinstellung im Bereich der Lagerplatte 14 zu verzichten, wenn der Vorlockerer 1 mit einer verstellbaren Tiefeneinstellung versehen ist. Es genügt dann möglicherweise auch eine einfache, nicht verstellbare Verbindung des Tragarmes 5 mit der Lagerplatte 14.

Bei dem in Fig. 3 gezeigten Ausführungsbeispiel sind, ähnlich wie bei dem Ausführungsbeispiel gemäß Fig. 1, der Dreipunktturm 4 und der vertikale Turm 27 der Bodenbearbeitungsmaschine 2 über die parallen Lenker 9, 10 verbunden. Zur Einstellung der Arbeitstiefe der Bodenbearbeitungsmaschine 2 dient ein längenveränderbarer Schräglenker 19, welcher beispielsweise in Form eines Spannschlosses ausgebildet sein kann und welcher an seinem unteren Ende an dem Dreipunktturm 4 angelenkt ist. Das obere Ende des Schräglenkers 19 weist eine Langlochführung 18 auf, in welcher ein Führungsbolzen 32 verschiebbar geführt ist, welcher im hinteren Bereich der parallen Lenker 9 befestigt ist. Mittels des Schräglenkers 19 ist es somit möglich, die Arbeitstiefe der Bodenbearbeitungsmaschine 2 einzustellen, die Langlochführung 18 ermöglicht eine ausreichende Vertikalbewegung.

Es ist zu erwähnen, daß die Abstützung der Bodenbearbeitungsmaschine nicht notwendigerweise über den Schräglenker 19 erfolgen muß, vielmehr ist es auch möglich, die Bodenbearbeitungsmaschine 2 direkt an dem Dreipunktturm des Vorlockerers 1 abzustützen. Der Turm 27 der Bodenbearbeitungsmaschine 2 kann beispielsweise mit einem nach vorne weisenden Ansatz versehen sein, welcher auf einem Ansatz oder Vorsprung des Dreipunktturms 4 des Vorlockerers 1 aufliegt. Auf eine Einstellbarkeit kann verzichtet werden, wenn die Stiele des Vorlockerers 1 relativ zu den Taschen 23 verstellbar sind, da die Einstellung der Bodenbearbeitungsmaschine 2 dann indirekt über die verstellbaren Anschläge 6 erfolgt. Weiterhin muß im Bereich der Tasche 23 ein großer Verstellbereich vorhanden sein, da die Vorlockerer 1 bis zu einer Arbeitstiefe von ca. 40 cm in das Erdreich eindringen müssen, während die Werkzeuge der Bodenbearbeitungsmaschine 2 weniger als 10 cm tief eingebracht werden müssen. Der große, für den Vorlockerer 1 erforderliche Verstellbereich kann allein über eine Verstellung der Anschläge 6 nicht realisiert werden, da der Dreipunktturm 4 wegen der Lenker 20, 21 nicht beliebig in der Höhe verstellt werden kann.

In einer weiteren, im einzelnen nicht dargestellten Ausgestaltungsvariante ist vorgesehen, daß die Tragarme 5 an dem Dreipunktturm 4 starr befestigt sind, so daß auf verstellbare Anschläge 6 verzichtet werden kann. Die Bodenbearbeitungsmaschine 2 stütz sich dann über die Anschläge 8 ab, ist also gegenüber dem Dreipunktturm 4 höhenverstellbar. Der Vorlockerer 1 ist mit Hilfe der Taschen 23 und der Lochreihen 24 in der Höhe verstellbar.

In Fig. 1 ist weiterhin eine Feder 33 gezeigt, welche ein Anheben der Bodenbearbeitungsmaschine 2 erleichtert.

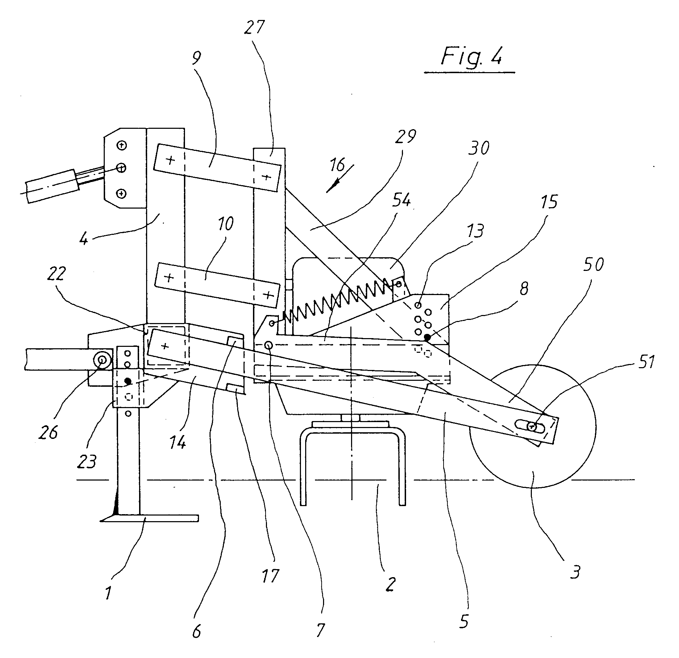

In Fig. 4 ist ein weiteres Ausführungsbeispiele des erfindungsgemäßen Kombinationsgerätes dargestellt. Dieses unterscheidet sich von dem in Fig. 1 gezeigten Kombinationsgerät dadurch, daß zusätzliche Tragarme 54, an deren hinteren Enden 50 die Walze gelagert ist, an den Lagerplatten 15 der Bodenbearbeitungsmaschine 2 schwenkbar gelagert sind. Im Bereich der Lagerung 7' weist der zusätzliche Tragarm 54 einen Ansatz auf, an welchem eine Feder 33' eingehängt ist, deren anderes Ende an der Lagerplatte 15 befestigt ist.

Der Tragarm 5 ist schwenkbar am Bereich des Querholms 22 gelagert und an seinem freien Ende mit einem Langloch versehen, welches eine Lagerstelle 51 bildet und der Abstützung an der Achse der Walze 3 dient. Die Bodenbearbeitungsmaschine ist über den Anschlag 8 an dem zusätzlichen Tragarm 54 abgestützt.

Der Dreipunktturm 4 ist in üblicher Weise mit einer Lagerplatte 14 versehen, welche einen oberen Anschlag 6 und einen unteren Anschlag 17 umfaßt, welche jeweils die Schwenkbewegung des Tragarms 5 begrenzen. Alternativ dazu ist es jedoch auch möglich, den Tragarm 5 starr an dem Querholm 22 zu befestigen.

Bei der in Fig. 4 gezeigten Ausführungsform erfolgt eine Abstützung des Vorlockerers an der Achse 51 der Walze 3. Auf diese Weise ist immer die gleiche Höhenlage zwischen der Walze 3 und dem Dreipunktturm 4 gegeben, vorausgesetzt, der Anschlag 6 ist nicht höhenveränderbar ausgebildet. Wenn die Arbeitstiefe durch ein Versetzen der Bolzen 8 verändert wird, ändert sich die Höhenlage des Dreipunktturms 4 nicht. Um die Arbeitstiefe des Vorlockerers einzustellen, muß dieser in den Taschen 23 höhenverändert werden. Ein Vorteil dieser Ausführungsform liegt darin, daß bei einer tieferen Bodenbearbeitung der Turm 4 bzw. der Querholm 22 nicht in eine tiefere Lage gelangt, so daß die einmal gewählte Bodenfreiheit unter dem Querholm 22 stets erhalten bleibt.

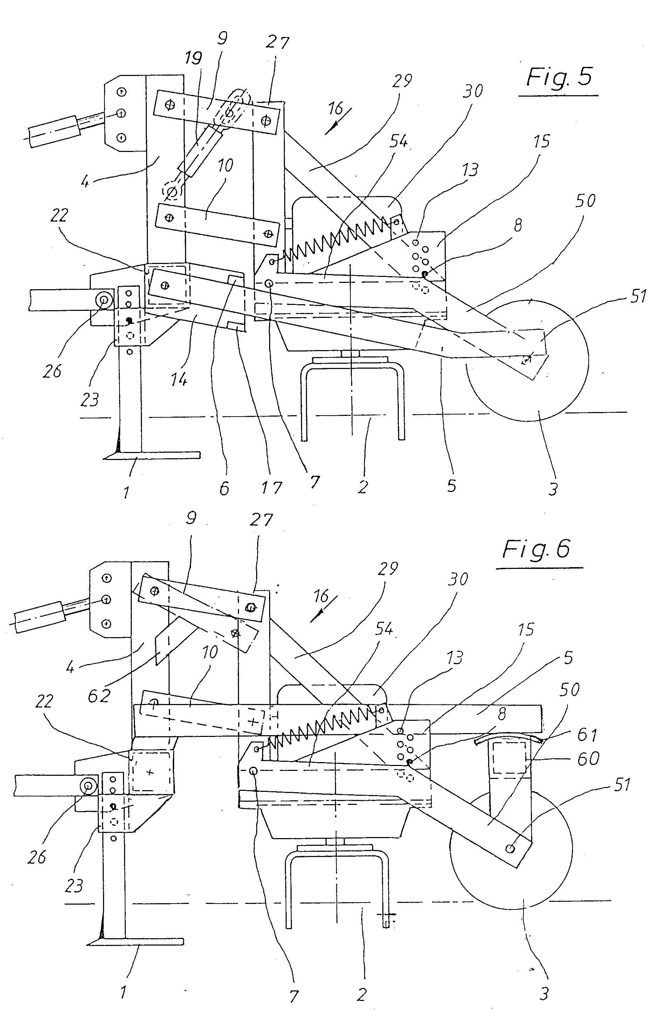

Eine weitere Ausführungsform des erfindungsgemäßen Kombinationsgerätes ist in Fig. 5 dargestellt. Diese Ausführungsform entspricht im wesentlichen der in Fig. 4 gezeigten Ausführungsform, unterscheidet sich von dieser jedoch darin, daß ein zusätzliches Spannschloß 19 zwischen dem Dreipunktturm 4 und dem oberen Parallellenker 9 angeordnet ist. Das Spannschloß 19 weist an einer Seite ein Langloch auf, in welchem ein in Fig. 5 im einzelnen nicht bezeichneter Bolzen verschiebbar gelagert ist. Weiterhin ist das freie Ende des Tragarms 5 nicht, wie bei Fig. 4 gezeigt, mit einem Langloch versehen, so daß die Achse 51 nicht mehr von dem Arm 5 getragen wird. Die vorher durch das Ende des Tragarms 5 vorgesehene Abstützung der Achse 51 wird durch das Spannschloß 19 übernommen. Bei einem Anheben der Bodenbearbeitungsmaschine ist es somit möglich, die Einstellung der Arbeitstiefe, d. h. eine Versetzung der Bolzen 8 in der Platte 15 vorzunehmen, ohne daß dazu die Bodenbearbeitungsmaschine 2 auf einen festen Untergrund aufgestellt werden müßte. Anstelle des Spannschlosses 19 kann auch ein Anschlag bzw. ein Anschlagpaar im Bereich des Dreipunktturms 4 vorgesehen sein. Das Langloch des Spannschlosses 19 dient dazu, eine Ausweichbarkeit der Bodenbearbeitungsmaschine 2 bzw. der Kreiselegge zu gewährleisten.

Das in Fig. 6 gezeigte Ausführungsbeispiel entspricht ebenfalls im wesentlichen dem Ausführungsbeispiel gemäß Fig. 4, unterscheidet sich von diesem jedoch darin, daß die Tragarme 5 nicht mehr an der Außenseite des Kombinationsgerätes angeordnet sind und somit dessen Gesamtbreite beeinflussen, sondern im wesentlichen oberhalb des Gehäuses 30 der Bodenbearbeitungsmaschine 2 angeordnet sind. Auf diese Weise ist es möglich, die gesamte zur Verfügung stehende Transportbreite von beispielsweise 3 m möglichst vollständig auszunutzen. Die Tragarme 5 sind nicht mehr an ihrem vorderen Ende schwenkbar und mittels Anschlägen 6, 17 in ihrer Bewegung begrenzt an dem Dreipunktturm gelagert, so wie dies in den Fig. 4 und 5 dargestellt ist, sondern diese sind fest mit dem Querbalken 22 zu verbinden.

Die Walze 3 ist zusätzlich mittels eines Querbalkens 60 überbrückt, welcher an den unteren Enden der Arme 50 bzw. der Achse 51 gelagert ist. An der Oberseite ist der Querbalken 60 mit einer gewölbten Platte 61 versehen, auf welcher die Tragarme 5 aufliegen. Die Wölbung der Platte 61 gestattet es, in sämtlichen Betriebssituationen stets eine Krafteinleitung direkt durch die Drehachse der Walze vorzunehmen.

Weiterhin ist in Fig. 6 ein Anschlag 62 dargestellt, welcher an dem Dreipunktturm 4 angebracht ist und auf diese Weise den Verschwenkwinkel des oberen Lenkers 9 begrenzt. Auf diese Weise erfolgt eine Abstützung der Bodenbearbeitungsmaschine 2 im angehobenen Zustand.

Um zu verhindern, daß Pflanzenreste, beispielsweise Stroh, welche von dem Vorlockerer angehoben werden, die Werkzeuge der Bodenbearbeitungsmaschine 2 verstopfen, kann es sich als günstig erweisen, wie in Fig. 1 gezeigt, eine Planierschiene vor der Bodenbearbeitungsmaschine anzuordnen, welche eine schräg angestellte Leitfläche aufweist.

Ein erfindungsgemäß ausgebildetes Kombinationsgerät eignet sich insbesondere für eine Koppelung mit einer Sämaschine, bei der die Saatgutabgabe in durch die Walze erzeugte Rillen erfolgt. Die Walze ist dann mit im Abstand der Saatreihen aufgesetzte Rippen versehen, die durch Druck Rillen erzeugen. Die Rillen werden anschließend durch Striegel verschlossen.

Der Grund der Rillen muß dicht genug angedrückt sein, wozu die Walze eine ausreichende Belastung braucht. Die Belastung der Walze aus dem Vorgerät und der Kreiselegge reicht dazu aus, wobei durch greifend eingestellte Vorlockererschare der Druck noch erhöht werden kann. Sollte die Kreiselegge an einem Hindernis springen, so ist die Walze nicht plötzlich ganz unbelastet. da der Vorlockerer noch belastet, und der Sävorgang somit nicht beeinträchtigt wird.

Die Erfindung ist nicht auf das gezeigte Ausführungsbeispiel beschränkt, vielmehr ergeben sich im Rahmen der Erfindung gemäß der Ansprüche vielfältige Abwandlungsmöglichkeiten.

## Patentansprüche

1. Kombinationsgerät mit einem Vorlockerer (1), einer über eine Zapfwelle antreibbaren Bodenbearbeitungsmaschine (2) und einer nachgeordneten Walze (3), wobei der Vorlockerer (1) über einen Dreipunktturm (4) an einen Schlepper koppelbar ist und wobei die Bodenbearbeitungsmaschine (2) über frei bewegliche, vorzugsweise parallele Lenker (9;10) an dem Dreipunktturm (4) gelagert ist, wobei beidseitige Tragarme (5) der Walze (3) unmittelbar am unteren Bereich des Dreipunktturms (4) gelagert sind, dadurch gekennzeichnet,
- daß zumindest die Bodenbearbeitungsmaschine (2) auf den Tragarmen (5) abstützbar und ebenfalls, zum Ausweichen von Hindernissen, bezüglich der Tragarme (5) nach oben bewegbar ist,
- oder daß zumindest die Bodenbearbeitungsmaschine (2) auf zusätzlichen beidseitigen Tragarmen (54) der Walze (3), die über einen vorzugsweise vertikalen, mittels der Lenker (9;10) zusammen mit der an ihm starr befestigten Bodenbearbeitungsmaschine (2) an dem Dreipunktturm (4) beweglich angelenkten Turm (27) an dem Dreipunktturm (4) schwenkbar gelagert sind, abstützbar und ebenfalls, zum Ausweichen von Hindernissen, bezüglich der Tragarme (5) nach oben bewegbar ist.

2. Kombinationsgerät nach Anspruch 1, dadurch gekennzeichnet, daß die Tragarme (5) am unteren Bereich des Dreipunktturms (4) der Bodenbearbeitungsmaschine (2) schwenkbar gelagert sind.

3. Kombinationsgerät nach Anspruch 2, dadurch gekennzeichnet, daß Anschläge (17;19;32;62) vorgesehen sind, durch die die Tragarme (5) in Richtung auf den Boden nur begrenzt verschwenkbar sind.

4. Kombinationsgerät nach Anspruch 2, dadurch gekennzeichnet, daß an dem unteren Bereich des Dreipunktturms (4) jeweils ein Anschlag (6) zur Begrenzung der Schwenkbewegung der Walze (3) relativ zum Dreipunktturm (4) angeordnet ist.

5. Kombinationsgerät nach Anspruch 4, dadurch gekennzeichnet, daß der Anschlag (6) direkt an dem Dreipunktturm (4) und für die Tragarme (5) vorgesehen ist.

6. Kombinationsgerät nach einem der Ansprüche 4 oder 5, dadurch gekennzeichnet, daß der Anschlag (6) in einem Abstand zur Schwenkachse (7) der Tragarme (5) angeordnet ist.

7. Kombinationsgerät nach einem der Ansprüche 1 bis 6, dadurch gekennzeichnet, daß die Bodenbearbeitungsmaschine (2) an einem der Walze (3) zugewandten Endbereich jeweils einen Anschlag (8) zur Anlage des Tragarms (5) oder des zusätzlichen Tragarmes (54) aufweist.

8. Kombinationsgerät nach einem der Ansprüche 1 bis 7, dadurch gekennzeichnet, daß diagonal zwischen dem Dreipunktturm (4) und dem Turm (27) oder einem der zusätzlichen Tragarme (54) und dem Turm (27) der Bodenbearbeitungsmaschine (2) ein Federelement (33) angeordnet ist.

9. Kombinationsgerät nach einem der Ansprüche 1 bis 7, dadurch gekennzeichnet, daß die Bodenbearbeitungsmaschine (2) an den Tragarmen (5) jeweils über eine eine vertikale Bewegung ermöglichende, an den Tragarmen (5) angeordnete Langlochführung (11) und an dem Dreipunktturm (4) über zumindest einen oberen Lenker (12) gelagert ist.

10. Kombinationsgerät nach einem der Ansprüche 8 oder 9, dadurch gekennzeichnet, daß zur Einstellung der Neigung des Vorlockerers der jeweilige Lenker (9, 12) längenveränderbar ausgebildet ist.

11. Kombinationsgerät nach einem der Ansprüche 4 bis 10, dadurch gekennzeichnet, daß die Anschläge (6, 8) jeweils einstellbar in Form von Bolzen ausgebildet sind, welche wahlweise zur Einstellung der Arbeitstiefe des Vorlockerers (1) bzw. der Bodenbearbeitungsmaschine (2) in eine von jeweils mehreren Ausnehmungen (13) einsteckbar sind.

12. Kombinationsgerät nach Anspruch 11, dadurch gekennzeichnet, daß die Ausnehmungen (13) jeweils in einer Lagerplatte (14, 15) ausgebildet sind, welche an dem Dreipunktturm (4) des Vorlockerers (1) bzw. einem Rahmen (16) der Bodenbearbeitungsmaschine (2) angebracht ist.

13. Kombinationsgerät nach Anspruch 1, dadurch gekennzeichnet, daß die Tragarme (5) für die Walze (3) starr am Dreipunktturm (4) befestigt sind.

14. Kombinationsgerät nach einem der Ansprüche 4 bis 10, dadurch gekennzeichnet, daß zwischen dem Dreipunktturm (4) und dem Rahmen (16) der Bodenbearbeitungsmaschine (2) zur Einstellung der Arbeitstiefe der Bodenbearbeitungsmaschine (2) ein längenveränderbarer, eine Langlochführung (18) aufweisender Schräglenker (19) angeordnet ist, der auch für die zusätzlichen an dem Turm (27) angelenkten Tragarme (54) als Anschlag dient.

15. Kombinationsgerät nach einem der Ansprüche 1 bis 14, dadurch gekennzeichnet, daß die Bodenbearbeitungsmaschine (2) in Form einer Kreiselegge ausgebildet ist.

16. Kombinationsgerät nach einem der Ansprüche 1 bis 15, dadurch gekennzeichnet, daß der Vorlockerer (1) lageveränderbar einstellbar ist.

17. Kombinationsgerät nach einem der Ansprüche 1 bis 16, dadurch gekennzeichnet, daß der Vorlockerer (1) in Form in einer Reihe nebeneinander angeordneter, höheneinstellbarer Grubber ausgebildet ist.

18. Kombinationsgerät nach Anspruch 17, dadurch gekennzeichnet, daß der Vorlockerer (1) breite Flügelschare mit einer großen Oberfläche umfaßt.

19. Kombinationsgerät nach einem der Ansprüche 1 bis 12 und 14 bis 18, dadurch gekennzeichnet, daß die zusätzlichen Tragarme (54) an den Lagerplatten (15) des Rahmens (16) der Bodenbearbeitungsmaschine (2) und die Tragarme (5), deren freie Enden mit der Achse der Walze (3) gekoppelt sind, an dem Dreipunktturm (4) schwenkbar gelagert sind.

20. Kombinationsgerät nach Anspruch 19, dadurch gekennzeichnet, daß Lagerplatten (14) des Dreipunktturms (4) obere (6) und untere (17) Anschläge zur Begrenzung der Schwenkbarkeit der Tragarme (5) aufweisen.

21. Kombinationsgerät nach einem der Ansprüche 1 bis 20, dadurch gekennzeichnet, daß vor der Bodenbearbeitungsmaschine (2) eine Planierschiene angeordnet ist.

22. Kombinationsgerät nach einem der Ansprüche 1 bis 21, gekennzeichnet durch eine Abstützeinrichtung, welche im ausgehobenen Zustand des Kombinationsgerätes als Begrenzung der Bewegbarkeit der Bodenbearbeitungsmaschine (2) gegenüber dem Dreipunktturm (4) wirkt.

23. Kombinationsgerät nach Anspruch 22, dadurch gekennzeichnet, daß die Abstützeinrichtung zumindest einen Anschlag (62) umfaßt, welcher am Dreipunktturm (4) oder an einem Querbalken (22), welcher mit dem Dreipunktturm (4) verbunden ist, angeordnet ist.

24. Kombinationsgerät nach Anspruch 22, dadurch gekennzeichnet, daß die Abstützeinrichtung ein Spannschloß (19) umfaßt, welches am Dreipunktturm (4) und im Bereich der Bodenbearbeitungsmaschine (2) angeordnet ist.

25. Kombinationsgerät nach Anspruch 24, dadurch gekennzeichnet, daß das Spannschloß (19) zur Ermöglichung der Ausweichbarkeit der Bodenbearbeitungsmaschine (2) mit einer Langlochführung versehen ist.

26. Kombinationsgerät nach Anspruch 13, dadurch gekennzeichnet, daß die Tragarme (5) oberhalb der Bodenbearbeitungsmaschine (2) und innenliegend bezüglich der zusätzlichen Tragarme (54) der Walze (3) angeordnet sind und auf einem die zusätzlichen Tragarme (54) verbindenden Querbalken (60) abstützbar sind.

27. Kombinationsgerät nach Anspruch 26, dadurch gekennzeichnet, daß der Abstützbereich des Querbalkens (60) mit einer profilierten Fläche (61) versehen ist.

## Claims

1. A combined machine, with a pre-loosening device (1), a soil-tilling machine (2) drivable via a power take-off shaft, and a roller (3) arranged subsequently thereto, wherein it is possible to couple the pre-loosening device (1) to a tractor via a three-point upright member (4), and the soil-tilling machine (2) is mounted on the three-point upright member (4) via freely displaceable, preferably parallel guide arms (9, 10), and carrier arms (5) on both sides of the roller (3) are mounted directly on the lower region of the three-point upright member (4), **characterised in that**
- at least the soil-tilling machine (2) is supportable on the carrier arms (5), and is also displaceable upwards in relation to the carrier arms (5) to avoid obstacles;
- or at least the soil-tilling machine (2) is supportable on additional carrier arms (54) on both sides of the roller (3), which arms are pivotably mounted on the three-point upright member (4) via a preferably vertical upright member (27) displaceably linked to the three-point upright member (4), together with the soil-tilling machine (2) rigidly secured thereon, by means of the guide arms (9, 10), and also, to avoid obstacles, the said soil-tilling machine (2) is displaceable upwards in relation to the carrier arms (5).

2. A combined machine in accordance with claim 1, **characterised in that** the carrier arms (5) are pivotably mounted on the lower region of the three-point upright member (4) of the soil-tilling machine (2).

3. A combined machine in accordance with claim 2, **characterised in that** stop devices (17; 19; 32; 62) are provided, and by means thereof the carrier arms (5) are only pivotable to a limited extent in the direction of the soil.

4. A combined machine in accordance with claim 2, **characterised in that** a respective stop device (6) is arranged on the lower region of the three-point upright member (4), to delimit the pivoting movement of the roller (3) in relation to the three-point upright member (4).

5. A combined machine in accordance with claim 4, **characterised in that** the stop device (6) is provided for the supporting arms (5) and directly on the three-point upright member (4).

6. A combined machine in accordance with one of claims 4 or 5, **characterised in that** the stop device (6) is arranged at a distance from the pivoting axis (7) of the carrier arms (5).

7. A combined machine in accordance with one of claims 1 to 6, **characterised in that**, at an end region facing the roller (3), the soil-tilling machine (2) has a respective stop device (8) against which the carrier arm (5) or the additional carrier arm (54) can rest.

8. A combined machine in accordance with one of claims 1 to 7, **characterised in that** a spring member (33) is arranged diagonally between the three-point upright member (4) and the upright member (27) or between one of the additional carrier arms (54) and the upright member (27) of the soil-tilling machine (2).

9. A combined machine in accordance with one of claims 1 to 7, **characterised in that** the soil-tilling machine (2) is mounted on the carrier arms (5) respectively via a slotted guide (11) arranged on the carrier arms (5) and allowing vertical movement, and is mounted on the three-point upright member (4) via at least one upper guide arm (12).

10. A combined machine in accordance with one of claims 8 or 9, **characterised in that** the respective guide arm (9, 12) is formed to be of adjustable length for adjustment of the inclination of the pre-loosening device.

11. A combined machine in accordance with one of claims 4 to 10, **characterised in that** the stop devices (6, 8) are respectively adjustably formed as pins, insertable according to choice in one of a respective plurality of recesses (13), for adjustment of the working depth of the pre-loosening device (1) and/or the soil-tilling machine (2).

12. A combined machine in accordance with claim 11, **characterised in that** the recesses (13) are respectively formed in a bearing plate (14, 15) positioned on the three-point upright member (4) of the pre-loosening device (1) and on a frame (16) of the soil-tilling machine (2) respectively.

13. A combined machine in accordance with claim 1, **characterised in that** the carrier arms (5) for the roller (3) are rigidly secured on the three-point upright member (4).

14. A combined machine in accordance with one of claims 4 to 10, **characterised in that** an angled guide arm (19), adjustable in length and having a slotted guide (18), is arranged between the three-point upright member (4) and the frame (16) of the soil-tilling machine (2), to adjust the working depth of the soil-tilling machine (2), the said angled guide arm also serving as a stop device for the additional carrier arms (54) linked to the upright member (27).

15. A combined machine in accordance with one of claims 1 to 14, **characterised in that** the soil-tilling machine (2) is in the form of a circular harrow.

16. A combined machine in accordance with one of claims 1 to 15, **characterised in that** the pre-loosening device (1) is adjustable, in that its position can be altered.

17. A combined machine in accordance with one of claims 1 to 16, **characterised in that** the pre-loosening device (1) is in the form of a series of adjacent height-adjustable cultivators.

18. A combined machine in accordance with claim 17, **characterised in that** the pre-loosening device (1) comprises broad large-surface ploughshare blades.

19. A combined machine in accordance with one of claims 1 to 12 and 14 to 18, **characterised in that** the additional carrier arms (54) are pivotably mounted on the bearing plates (15) on the frame (16) of the soil-tilling machine (2), and the carrier arms (5), the free ends of which are coupled to the shaft of the roller (3), are pivotably mounted on the three-point upright member (4).

20. A combined machine in accordance with claim 19. **characterised in that** bearing plates (14) on the three-point upright member (4) have upper (6) and lower (17) stop devices to delimit the pivoting capacity of the carrier arms (5).

21. A combined machine in accordance with one of claims 1 to 20, **characterised in that** a levelling rail is arranged in front of the soil-tilling machine (2).

22. A combined machine in accordance with one of claims 1 to 21, **characterised by** a supporting device, which in the raised position of the combined machine acts as a delimitation of the movability of the soil-tilling machine (2) in relation to the three-point upright member (4).

23. A combined machine in accordance with claim 22, **characterised in that** the supporting device comprises at least one stop device (62) arranged on the three-point upright member (4) or on a transverse bar (22) connected to the three-point upright member (4).

24. A combined machine in accordance with claim 22, **characterised in that** the supporting device comprises a turnbuckle (19) arranged on the three-point upright member (4) and in the region of the soil-tilling machine (2).

25. A combined machine in accordance with claim 24, **characterised in that** the turnbuckle (19) is provided with a slotted guide to allow the soil-tilling machine (2) to be displaced to avoid obstacles.

26. A combined machine in accordance with claim 13, **characterised in that** the carrier arms (5) are arranged above the soil-tilling machine (2) and to the interior in relation to the additional carrier arms (54) on the roller (3), and are supportable on a transverse bar (60) connecting the additional carrier arms (54).

27. A combined machine in accordance with claim 26, **characterised in that** the supporting region of the transverse bar (60) is provided with a profiled surface (61).

## Revendications

1. Machine combinée comportant un outil d'ameublissement préalable du sol (1), une machine de travail du sol (2), pouvant être entraînée par l'intermédiaire d'une prise de force, et un rouleau (3) disposé derrière celle-ci, l'outil d'ameublissement préalable du sol (1) pouvant être accouplé, par l'intermédiaire d'une tourelle à trois points (4), à un tracteur et la machine de travail du sol (2) étant montée, au moyen d'un bras d'articulation (9; 10), sur la tourelle à trois points (4), étant entendu que des bras porteurs (5) du rouleau (3) sont montés, sur les deux côtés, directement sur la partie inférieure de la tourelle à trois points (4), caractérisée
- en ce qu'au moins la machine de travail du sol (2) peut s'appuyer sur les bras porteurs (5) et peut de même, pour s'écarter des obstacles, se déplacer vers le haut par rapport aux bras porteurs (5),
- ou en ce qu'au moins la machine de travail du sol (2) peut s'appuyer sur des bras porteurs supplémentaires (54) du rouleau (3), disposés des deux côtés et montés pivotants sur la tourelle à trois points (4), par l'intermédiaire d'une tourelle (27), de préférence verticale, s'articulant sur la tourelle à trois points (4) au moyen des bras d'articulation (9; 10), en même temps que la machine de travail du sol (2) fixée rigidement sur elle, et, de même, la machine de travail du sol (2) peut se déplacer vers le haut par rapport aux bras porteurs (5) pour s'écarter des obstacles.

2. Machine combinée suivant la revendication 1, caractérisée en ce que les bras porteurs (5) sont montés pivotants à la partie inférieure de la tourelle à trois points (4) de la machine de travail du sol (2).

3. Machine combinée suivant la revendication 2, caractérisée en ce que sont prévues des butées (17; 19; 32; 62) grâce auxquelles les bras porteurs (5) ne peuvent pivoter vers le bas que de façon limitée.

4. Machine combinée suivant la revendication 2, caractérisée en ce qu'à la partie inférieure de la tourelle à trois points (4), est chaque fois disposée une butée (6) pour limiter le mouvement de pivotement du rouleau (3) par rapport à la tourelle à trois points (4).

5. Machine combinée suivant la revendication 4, caractérisée en ce que la butée (6) est prévue directement sur la tourelle à trois points (4) et pour les bras porteurs (5).

6. Machine combinée suivant l'une quelconque des revendications 4 ou 5, caractérisée en ce que la butée (6) est disposée dans une certaine distance par rapport à l'axe de pivotement (7) des bras porteurs (5).

7. Machine combinée suivant l'une quelconque des revendications 1 à 6, caractérisée en ce que la machine de travail du sol (2) présente, a chacune des extrémités tournées vers le rouleau (3), une butée (8) pour l'appui du bras porteur (5) ou du bras porteur supplémentaire (54).

8. Machine combinée suivant l'une quelconque des revendications 1 à 7, caractérisée en ce qu'un organe formant ressort (33) est disposé en diagonale, entre la tourelle à trois points (4) et la tourelle (27), ou entre l'un des bras porteurs supplémentaires (54) et la tourelle (27), de la machine de travail du sol (2).

9. Machine combinée suivant l'une quelconque des revendications 1 à 7, caractérisée en ce que la machine de travail du sol (2) est montée sur les bras porteurs (5), chaque fois par l'intermédiaire d'un guidage comportant un trou allongé (11), disposé sur les bras porteurs (5) et permettant un mouvement vertical, et, sur la tourelle à trois points (4), par l'intermédiaire d'au moins un bras d'articulation supérieur (12).

10. Machine combinée suivant l'une quelconque des revendications 8 ou 9, caractérisée en ce que, pour régler l'inclinaison de l'outil d'ameublissement préalable du sol, chaque bras articulation (9, 12) correspondant est réalisé avec possibilité de modifier sa longueur.

11. Machine combinée suivant l'une quelconque des revendications 4 à 10, caractérisée en ce que les butées (6, 8) sont chacune réalisées réglables sous la forme de goujons que l'on peut enfoncer à volonté dans l'un de plusieurs évidements (13), pour régler respectivement la profondeur de travail de l'outil d'ameublissement préalable du sol (1) et de la machine de travail du sol (2).

12. Machine combinée suivant la revendication 11, caractérisée en ce que les évidements (13) sont chacun réalisés dans une plaque d'assise (14, 15), rapportée respectivement sur la tourelle à trois points (4) de l'outil d'ameublissement préalable du sol (1), et sur un cadre (16) de la machine de travail du sol (2).

13. Machine combinée suivant la revendication 1, caractérisée en ce que les bras porteurs (5) pour le rouleau (3) sont fixés rigidement sur la tourelle à trois points (4).

14. Machine combinée suivant l'une quelconque des revendications 4 à 10, caractérisé en ce qu'entre la tourelle à trois points (4) et le cadre (16) de la machine de travail du sol (2), est disposé, pour le réglage de la profondeur de travail de la machine de travail du sol (2), un bras incliné articulé (19), dont on peut modifier la longueur et qui présente un guidage (18) comportant un trou allongé, ce bras incliné articulé (19) servant également de butée pour les bras porteurs supplémentaires (54) s'articulant sur la tourelle (27).

15. Machine combinée suivant l'une quelconque des revendications 1 à 14, caractérisée en ce que la machine de travail du sol (2) est réalisée sous la forme d'une herse rotative.

16. Machine combinée suivant l'une quelconque des revendications 1 à 14, caractérisée en ce que l'outil d'ameublissement préalable du sol (1) est réglable en position.

17. Machine combinée suivant l'une quelconque des revendications 1 à 14, caractérisée en ce que l'outil d'ameublissement préalable du sol (1) est réalisé sous la forme de cultivateurs, disposés en série les uns à côté des autres et réglables en hauteur.

18. Machine combinée suivant la revendication 17, caractérisée en ce que l'outil d'ameublissement préalable du sol (1) est constitué de socs de charrue larges, comportant une grande surface de travail.

19. Machine combinée suivant l'une quelconque des revendications 1 à 12, caractérisée en ce que les bras porteurs supplémentaires (54) sont montés pivotants sur les plaques d'assise (15) du cadre (16) de la machine de travail du sol (2), et en ce que les bras porteurs (5), dont les extrémités libres sont accouplées à l'axe du rouleau (3), sont montés pivotants sur la tourelle à trois points (4).

20. Machine combinée suivant la revendication 19, caractérisée en ce que des plaques d'appui (14) de la tourelle à trois points (4) présentent des butées en haut (6) et en bas (17) pour limiter la capacité de pivotement des bras porteurs (5).

21. Machine combinée suivant l'une quelconque des revendications 1 à 20, caractérisée en ce qu'un rail de nivellement est disposé en avant de la machine de travail du sol (2).

22. Machine combinée suivant l'une quelconque des revendications 1 à 21, caractérisée par un dispositif d'appui agissant, en position relevée de la machine combinée, comme limitateur de la capacité de mouvement de la machine de travail du sol (2) par rapport à la tourelle à trois points (4).

23. Machine combinée suivant la revendication 22, caractérisée en ce que le dispositif d'appui comporte au moins une butée (62), qui est disposée sur la tourelle à trois points (4) ou sur une poutre transversale (22), reliée elle-même avec la tourelle à trois points (4).

24. Machine combinée suivant la revendication 22, caractérisée en ce que le dispositif d'appui comporte un tendeur (19), disposé sur la tourelle à trois points (4) et dans la zone de la machine de travail du sol (2).

25. Machine combinée suivant la revendication 24, caractérisée en ce que le tendeur (19) est muni d'un guidage comportant un trou allongé pour permettre l'effacement de la machine de travail du sol (2).

26. Machine combinée suivant la revendication 13, caractérisée en ce que les bras porteurs (5) sont disposés au-dessus de la machine de travail du sol (2) et à l'intérieur par rapport aux bras porteurs supplémentaires (54) du rouleau (3), et peuvent s'appuyer sur une poutre transversale (60) reliant les bras porteurs supplémentaires (54).

27. Machine combinée suivant la revendication 26, caractérisée en ce que la zone d'appui de la poutre transversale (60) est pourvue d'une surface profilée (61).
